# EUROPEAN PATENT APPLICATION

(11) **EP 2 082 800 A1**
(43) Date of publication of application: **29.07.2009**
(21) Application number: 09250178.2
(22) Date of filing: 23.01.2009
(51) Int. Cl.: B01J 23/40, B01J 23/44, B01J 23/46, B01J 23/745, B01J 23/75, C10G 2/00, B01J 31/02

(54) **Metallic catalyst and method for the production of metallic catalyst**

(30) Priority: 24.01.2008 BR PI0800207
(71) Applicant: Petroleo Brasileiro S.A. Petrobras, Rio de Janeiro, RJ (BR)
(72) Inventor: Dupont, Jairton, Porto Alegre, RS CEP: 91720-330 (BR); Silva, Dagoberto, Santana, Porto Alegre, RS CEP:90650-090 (BR); Pavan, Flavio André, Porto Alegre, RS CEP:96700-005 (BR); Machado, Giovanna, Partenon Porto Alegre, RS CEP:91510-460 (BR); Teixeira, Sergio R., Porto Alegre, RS CEP:91760-310 (BR); Cerqueira, Henrique Soares, Rio de Janeiro, RJ CEP:22.240-002 (BR); Belizario Dos Santos, Ana Carlota, Flamengo, Rio de Janeiro, RJ CEP:22.240-002 (BR); Aguiar, Eduardo Falabella Sousa, Riode Janeiro, RJ CEP:22.451-041 (BR)
(74) Representative: Benson, John Everett

(57) **Abstract**

The present invention relates to metallic catalysts containing nanoparticles of transition metals in particular of Co, Ru, Fe, Pd and Rh, disposed in pure ionic liquids or impregnated on supports that comprise zeolites, silicas, aluminas and oxides, forming catalytic systems, and to a method for preparation thereof.

## Description

### Field of the invention

The present invention relates to metallic catalysts containing nanoparticles of transition metals, and to a method for their preparation. More particularly the invention relates to catalysts possessing nanoparticles of metals selected from the group comprising Co, Ru, Fe, Pd, and Rh, which are contained in pure ionic liquids, or impregnated on supports selected from zeolites, silicas, aluminas and oxides, forming catalytic systems. In another aspect, the invention also relates to a method for the preparation of the catalysts.

### Background of the invention

The reaction between carbon monoxide and molecular hydrogen for producing hydrocarbons and oxygen-containing compounds, also known as the Fischer-Tropsch process, is catalysed by a wide range of transition metals such as cobalt, iron and ruthenium immobilized on the most varied types of supports such as silicas, zeolites and oxides *(*Chernavskii, P.A., Kinetics and Catalysis 2005, 46, 634-640*) .*

It is also known that ionic liquids, also known as fused salts, are constituted of salts derived from tetraalkyl ammonium or phosphonium cations or, more often, from heteroaromatic cations, associated with anions, for example BF₄, PF₆, CF₃SO₃, (CF₃SO₂)₂N, CF₃CO₂ *(*P. Wasserscheid, T. Welton; Ionic Liquids in Synthesis, VCH-Wiley, Weinheim, 2002*;* J. Dupont; R.F. De Souza, P.A.Z. Suarez; Chem. Rev.; 2002, 102, 3667*;* P. Wasserscheid, W. Keim; Angew. Chem. Int. Ed.; 2000, 39, 3773*;* T. Welton; Chem. Rev.; 1999, 99, 2071*),* are employed extensively as liquid supports for catalysts based on transition metals.

The ionic liquids most studied and used are those based on 1,3-dialkyl-imidazolium cations as they have unique physicochemical properties such as:
- they possess low vapour pressure;
- they are usually liquid over a wide temperature range (close to room temperature), they have sufficiently low viscosity (< 800 cP at 20°C) and are non-flammable;
- they possess thermal stability and electrochemical stability that are more favourable than those of the usual solvents;
- they dissolve a wide range of organic and inorganic compounds, whose solubilities can be adjusted by the choice of alkyl groups bound to the imidazole ring or by the nature of the anion;
- they are typically non-coordinating liquids;
- they are easily prepared from commercial reagents and by classical synthetic methods.

Said catalysts can be employed in conventionally known refining processes, such as hydrocracking, hydroisomerization, or hydrofining; Fischer-Tropsch synthesis, or can be employed in novel processes.

### Prior art

The Fischer-Tropsch process can be carried out with supported catalysts (dissolved or dispersed) in appropriate ionic liquids or immobilized on classical supports such as zeolites or even in the presence of a mixture of ionic liquids with the other supports.

The process of preparation of these catalysts is carried out in two stages that can be sequential or not, for example:
1. Decomposition of compounds of cobalt, iron and/or ruthenium dissolved in ionic liquids followed by direct use in the Fischer-Tropsch reaction;
2. Decomposition of compounds of cobalt, iron and/or ruthenium dissolved in ionic liquids followed by isolation of nanoparticles and re-dispersion of said nanoparticles in the liquids and use in the Fischer-Tropsch reaction;
3. Decomposition of compounds of cobalt, iron and/or ruthenium dissolved in ionic liquids in the presence of the supports or followed by addition of the supports (zeolites, silicas, aluminas or oxides) and use in the Fischer-Tropsch reaction;
4. Decomposition of compounds of cobalt, iron and/or ruthenium dissolved in ionic liquids in the presence of the supports or followed by addition of the supports (zeolites, silicas, aluminas or oxides) and later removal of the ionic liquid and use in the Fischer-Tropsch reaction.

In a series of articles, J. Dupont and co-workers present the preparation of nanoparticles of transition metals in ionic liquids, derived from reaction of transition metal chloride ligands and derivatives of 1,3-dialkyl-imidazolium.

The simple reduction of complexes or salts of iridium *(*J. Am. Chem. Soc. 2002, 124, 4228-4229*),* rhodium *(*Chem.-Eur. J. 2003, 9, 3263-3269*),* ruthenium (Catal. Lett. 2004, 92, 149-155*)* or palladium *(*J. Am. Chem. Soc. 2005, 127, 3298-3299*,* Adv. Synth. Catal. 2005, 347, 1404-1412*)* dissolved in ionic liquids derived from 1,3-dialkyl imidazolium, for example, 1-butyl-3-methyl imidazolium tetrafluoroborate, by molecular hydrogen, hydrides or olefins, produces nanoparticles of these metals in the ionic liquids, which are employed as catalysts for reactions of hydrogenation, hydroformylation and C-C coupling.

The decomposition of organometallic complexes of Pt(O) *(*Inorg. Chem. 2003, 42, 4738-4742*)* or Ru(O) *(*Chem.-Eur. J. 2004, 10, 3734-3740*)* in these ionic liquids also produces nanoparticles of the respective metals that are employed in catalytic processes, principally in the hydrogenation of olefins and arenes.

There are also articles that describe the preparation of nanoparticles of Pd in functionalized ionic liquids *(*Zhao, D.; Fei, Z.; Geldbach Tilmann, J.; Scopelliti, R; Dyson Paul, J., J. Am. Chem. Soc. 2004, 126, 15876-82) or of Rh in polymeric ionic liquids *(*Mu, X. D.; Meng, J. Q. ; Li, Z. C; Kou, Y., J. Am. Chem. Soc. 2005, 127, 9694-9695*).*

### Summary of the invention

The present invention relates to a method of synthesis of catalysts constituted of nanoparticles of cobalt, ruthenium and/or iron prepared in ionic liquids preferably derived from the 1-alkyl (C₁-C₂₀), 3-alkyl (C₁-C₂₀)-imidazolium cation associated with anions of the halide, carboxylate, sulphate, nitrate, sulphonate, phosphate, PF₆, BF₄, CF₃SO₃, (CF₃SO₂)₂N and (CF₃CF₂)₂PF₃ type, for the Fischer-Tropsch process.

### Brief description of the drawings

Fig. 1 is a typical X-ray diffraction pattern of cobalt nanoparticles isolated after the decomposition of Co₄(CO)₁₂ in 1-n-butyl-3-methylimidazolium tetrafluoroborate;
Fig. 2A is a typical X-ray diffraction pattern of cobalt nanoparticles in 1-n-butyl-3-methylimidazolium tetrafluoroborate (BMI.BF₄) after the decomposition of CO₄(CO)₁₂;
Fig. 2B is a magnified view of the diffraction pattern presented in Fig. 2A;
Fig. 3 is a typical example of a magnetization curve as a function of the magnetic field for the nanoparticles of Co that were isolated;
Fig. 4 is an example of a typical curve of magnetization versus temperature, curve ZFC-FC for the nanoparticles of Co in DMI.BF₄;
Fig. 5 shows a histogram of the size distribution of the nanoparticles of Co dispersed in ionic liquids (in this case in 1-n-butyl-3-methylimidazolium tetrafluoroborate, BMI.BF₄);
Fig. 6 shows a histogram with the size distribution of the nanoparticles of Co dispersed in ionic liquids (in this case in 1-n-decyl-3-methylimidazolium tetrafluoroborate, DMI.BF₄);
Fig. 7A shows the X-ray diffraction pattern with magnification of the region with 2θ = 35°-60°, where only the contribution of the zeolite is confirmed;
Fig. 7B shows a magnification of the scale relative to Fig. 7A;
Fig. 8 shows a histogram with the size distribution of the nanoparticles of Rh supported on zeolite A obtained by the reduction of RhCl₃ in 1-n-butyl-3-methylimidazolium tetrafluoroborate in the presence of zeolites;
Fig. 9A shows the gas chromatogram (A); and
Fig. 9B shows the liquid chromatogram (B).

### Detailed description of the invention

The nanoparticles of Co, Fe and Ru of the present invention were prepared by the decomposition of compounds of Co, Fe or Ru, preferably compounds in oxidation state zero such as metal carbonyls of the type Co₂(CO)₈, Co₄(CO)₁₂, Fe(CO)₅, Fe₂(CO)₈, Fe₃(CO)₁₂, Ru₃(CO)₁₂, Ru(cod)(cot) where cod = 1,5-cyclooctadiene and cot = 1,3,5-cyclooctatriene or mixed such as [Ru(Co)₃]₁₂-N+ (where N = quaternary ammonium salt), dissolved in ionic liquids preferably derived from the 1-alkyl (C₁-C₂₀), 3-alkyl (C₁-C₂₀)-imidazolium or 1-alkyl (C₁-C₂₀), 2-alkyl (C₁-C₂₀), 3-alkyl (C₁-C₂₀)-imidazolium cation associated with anions of the halide, carboxylate, sulphate, nitrate, sulphonate, phosphate, PF₆, BF₄, CF₃SO₃, (CF₃SO₂)₂N and (CF₃CF₂)₂PF₃ type in the absence or presence of hydrogen at various pressures (preferably between 400 and 5000 kPa, i.e., 4 and 50 bar), at temperatures between 30°C and 300°C (preferably between 50°C and 100°C) for a period between 10 minutes and 72 hours.

The dark mixture obtained containing metallic nanoparticles of the respective metals (Co, Ru, Fe, Pd, Rh, etc.) can be used directly in the Fischer-Tropsch process or mixed with supports such as zeolites, silicas, aluminas or oxides followed or not by removal of the ionic liquid and subsequent use in the Fischer-Tropsch process.

The nanoparticles prepared in the ionic liquids can be isolated preferably by centrifugation and re-dispersed in the ionic liquids or immobilized on the supports and used in the Fischer-Tropsch process.

It should be pointed out that the innovative process for preparation of catalysts proposed here can be used in the preparation of supported catalysts containing more than one active metal, with or without a promoter.

Another embodiment would be combination of the innovative technology disclosed here, with usual techniques of dry impregnation, precipitation of metals, etc.

The examples of the present invention, presented below, illustrate the methodology employed in the preparation of the nanoparticles (Example 1), of the nanoparticles supported on zeolites (Example 2), as well as the performance of a novel catalytic process (Example 3).

### Example 1: Preparation and characterization of cobalt nanoparticles

Co₄(CO)₁₂ (57 mg, 0.1 mmol) dissolved in 10 mL of n-pentane is added to 1 mL of 1-n-decyl-3-methylimidazolium tetrafluoroborate at 150°C with mechanical stirring and under an argon stream. After addition, stirring was maintained for two hours at 150°C for decomposition of the cobalt precursor.

After this time the stirring was stopped and the dark mixture containing cobalt nanoparticles was cooled to room temperature.

X-ray diffraction patterns were obtained in a SIEMENS D500 instrument using Bragg-Brentano geometry. The radiation used was copper (Cukα = 1.5418 Å). The monochromator used was a graphite crystal, and the equipment was operated using a voltage of 30 kV and a current of 25 mA in a range from 10°C to 100°C. The solid samples were dispersed in a layer on the glass support and were then analysed.

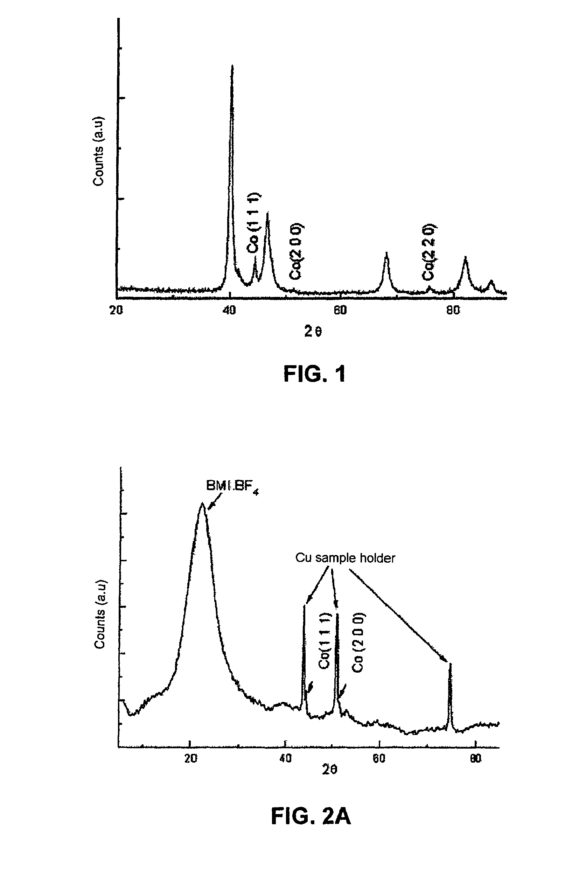

Fig. 1 shows a typical X-ray diffraction pattern of cobalt nanoparticles isolated after the decomposition of Co₄(CO**)₁₂** in 1-n-butyl-3-methylimidazolium tetrafluoroborate for nanoparticles of Co isolated from the ionic liquid, where we can identify the Bragg peaks characteristic of cubic Co, with the reflections of greater intensity, not indexed, corresponding to the residues of the precursor that has not decomposed completely.

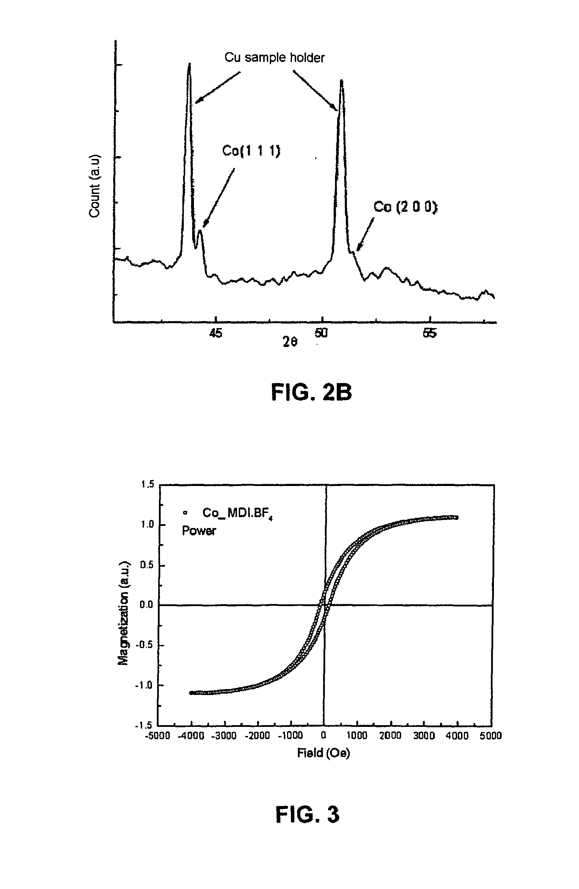

The diffraction pattern in Fig. 2A shows a typical spectrum of the ionic liquid, where we observe the arrows indicating the Bragg reflections, and Fig. 2B presents a magnified view of the diffraction pattern in Fig. 2A.

Measurements of magnetization were carried out using a field gradient magnetometer, AGM, for nanoparticles isolated from the ionic liquid and a SQUID Quantum Design magnetometer for nanoparticles soaked in ionic liquid.

Fig. 3 shows a magnetization curve as a function of the applied field, obtained in a field gradient magnetometer (AGM), for particles isolated from the ionic liquid. A slight hysteresis can be seen, relating to magnetostatic interactions between the particles, however the curve also shows a component characteristic of a superparamagnetic system formed by small particles, and it is observed that the magnetization curve does not show saturation for fields up to 4000 Oe.

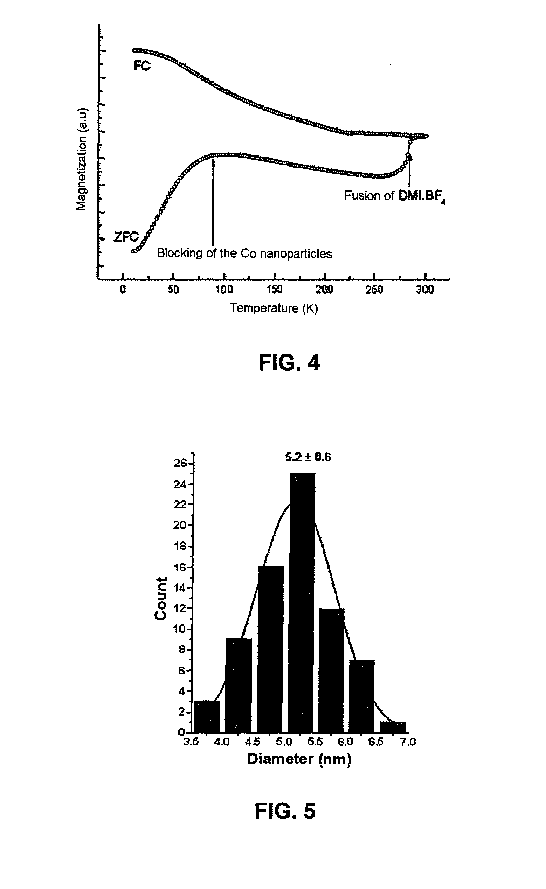

Fig. 4 shows a typical curve of magnetization versus temperature, curve ZFC-FC for the nanoparticles of Co on DMI.BF₄.

The analyses were performed with a small aliquot withdrawn directly from the reaction medium of nanoparticles of cobalt, ruthenium and iron prepared in ionic liquids derived from the 1-alkyl (C₁-C₂₀), 3-alkyl (C₁-C₂₀)-imidazolium or 1-alkyl (C₁-C₂₀), 2-alkyl (C₁-C₂₀), 3-alkyl (C₁-C₂₀)-imidazolium cation associated with anions of the halide, carboxylate, sulphate, nitrate, sulphonate, phosphate, PF₆, BF₄, CF₃SO₃, (CF₃SO₂)₂N and (CF₃CF₂)₂PF₃ type.

The suspensions of the nanoparticles were diluted in the respective ionic liquid (1/10) and the new solution was placed under a copper grating (300 mesh) covered with carbon in such a way that a thin film of this solution, of the order of 100 nm, adheres on the carbon film, providing better visualization in the microscope.

The size distribution of the nanoparticles was determined from the original negative, digitized and expanded to 470 pixel/cm for more precise resolution and measurement.

The histogram of size distribution was obtained by counting approximately 300 particles. The diameter of the particles in the micrographs was measured using Sigma Scan Pro 5 software.

Fig. 5 shows the histogram of the size distribution of the nanoparticles of Co dispersed in ionic liquids (in this case in 1-n-butyl-3-methylimidazolium tetrafluoroborate, BMI.BF₄).

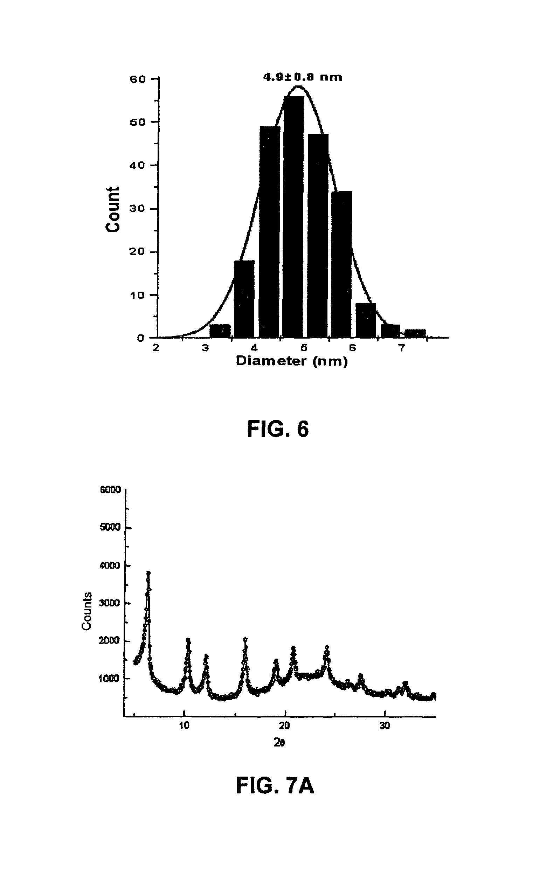

Fig. 6 shows the histogram of the size distribution of the nanoparticles of Co dispersed in ionic liquids (in this case in 1-n-decyl-3-methylimidazolium tetrafluoroborate, DMI.BF₄).

### Example 2: Preparation and characterization of nanoparticles supported on zeolites

Zeolites Y with the characteristics presented below in Table 1 were used.

A Fischer-Tropsch reactor was charged with 150 mg of zeolite; 26 mg (0.1 mmol) of RhCl₃ hydrate dissolved in 2 mL of methanol and 1 mL BMI.BF₄.

The methanol was removed by means of reduced pressure (0.1 mbar) at room temperature for 30 minutes.

The system was immersed in silicone oil and maintained at 75°C, stirring continuously, and 4 atm of pressure of molecular hydrogen was admitted to the system. After the system had darkened, the dark solution containing the nanoparticles supported on the substrate was centrifuged at 3500 rpm and then washed with acetone for various times to remove the ionic liquid. The supernatant was drawn off and the black solid residue was put in a Schlenk tube and dried at reduced pressure and was then characterized.

| **TABLE 1** | | | | | | | |
|---|---|---|---|---|---|---|---|
| **Zeolites** | **Area^{a} (m²/g)** | **Volume (cm³/g)** | **Diameter^{b} (nm)** | **SAR^{c} IV** | **FRX** | **A₀^{d}** | **Y^{e} (% Cryst.)** |
| **A** | 793 | 0.26 | 9.8 | 24.8 | 51.7 | 24.21 | 106 |
| **B** | 748 | 0.25 | 9.1 | 23.5 | 29.1 | 24.25 | 111 |
| **C** | 685 | 0.25 | 8.8 | 20.7 | 11.9 | 24.35 | 107 |

| | | | | | | | |
|---|---|---|---|---|---|---|---|
| Where: ^{a} = Surface area, determined by the BET method. ^{b} = Pore diameter, determined by the BJH method. ^{c} = SiO₂/Al₂O₃ ratio, determined by infrared (IV) and X-ray fluorescence (FRX). ^{d} = Size of unit cell determined by X-ray diffraction (DRX), ^{e} = Percentage crystallinity determined by (DRX). | | | | | | | |

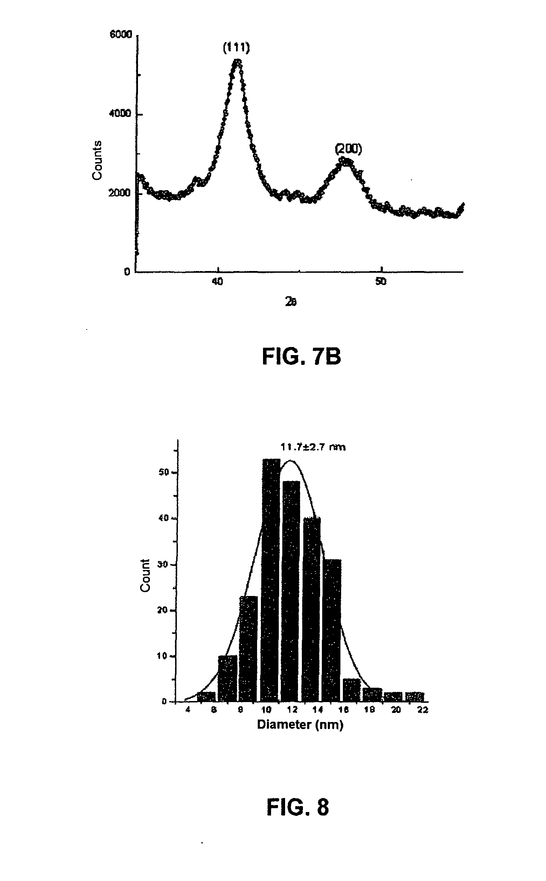

Figs. 7A and 7B show typical X-ray diffraction patterns with magnification of the region with 2θ = 35°-60° for the rhodium nanoparticles prepared by the reduction of RhCl₃ dispersed in 1-n-butyl-3-methylimidazolium tetrafluoroborate and in the presence of zeolites (in this case), where the diffraction pattern 7A shows only the contribution of the zeolite whereas the diffraction pattern 7B provides magnification of the scale, clearly showing the peak corresponding to the nanoparticles of Rh.

It is important to note that the two diffraction patterns correspond to the same sample of nanoparticles of Rh supported on zeolite (designated HDT9729).

Fig. 8 shows the histogram of the pore size distribution of zeolite A, having an average diameter of 11.7 ± 2.7 nm, and the investigations demonstrate that the rhodium clusters are confined to the pores of the zeolite, the size of the metallic particles being less than the size of the pores in the support.

The surface areas, pore volume and average pore diameter of the commercial zeolites and supported with metallic rhodium nanoparticles (Rh 3.1 wt.%) are presented below in Table 2, and were obtained from the nitrogen adsorption-desorption isotherms by the BET method, using the Micrometrics Gemini system at a temperature of 77 K. The samples were preheated at 110°C under a pressure of 10 - 1 Pa for 6 hours, and the average pore size distribution was found using the BJH mathematical model based on the nitrogen desorption isotherms.

| **TABLE 2** | | | | | | |
|---|---|---|---|---|---|---|
| **Commercial zeolites** | **Surface area (m²/g)^{a}** | | **Pore volume (cm³/g)** | | **Pore diameter (mm)^{b}** | |
| | Before | After | Before | After | Before | After |
| **A** | 793 | 682 | 0.26 | 0.21 | 9.8 | 8.7 |
| **B** | 748 | 627 | 0.25 | 0.20 | 9.1 | 8.3 |
| **C** | 685 | 565 | 0.25 | 0.19 | 8.8 | 8.1 |

Where:
^{a} = BET Method
^{b} = BJH Method

### Example 3: Catalytic Test

The test was carried out using a 25 mL batch reactor, which was charged with recently prepared cobalt nanoparticles suspended in 1-butyl-3-methylimidazolium tetrafluoroborate, and pressurized to 50 bar (5000 kPa) solely with a mixture of hydrogen and carbon monoxide (2:1 molar).

The reactor was heated to a temperature of 200°C, with mechanical stirring. After 48h of testing, it was observed that the initial pressure had dropped by approximately 50%.

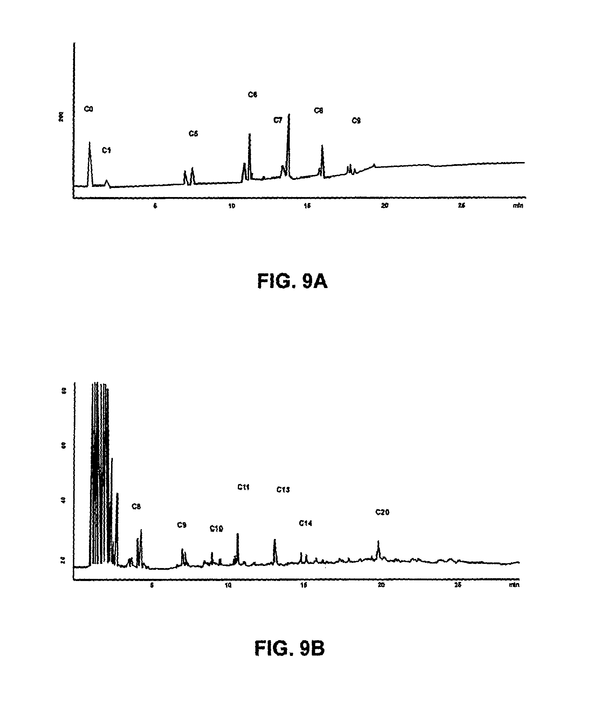

Fig. 9A shows the on-line gas analysis, and Fig. 9B shows the analysis of the liquid by extraction with organic solvent, analysis by gas chromatography using hydrogen as carrier gas, and mass spectrometry.

The results demonstrate that it is possible to carry out a novel process, where Fischer-Tropsch synthesis would be carried out in a homogeneous medium.

The catalytic mixture can be reused after removing the extraction solvent under reduced pressure.

Although the present invention has been presented according to its preferred embodiments, a person skilled in the art will be aware that conceivable variations and modifications can be made in the present invention, while remaining within its spirit and scope, which are defined by the claims presented below.

## Claims

1. Metallic catalyst, **characterized in that** it comprises nanoparticles of metals comprising one or more of Co, Ru, Fe, Pd and Rh, contained in a pure or substantially pure ionic liquid, preferably in the presence of supports selected from the group comprising zeolites, silicas, aluminas and oxides.

2. Metallic catalyst according to claim 1,
**characterized in that** said pure ionic liquid comprises one or more of 1-alkyl (C₁-C₂₀), 3-alkyl (C₁-C₂₀)-imidazolium cation and 1-alkyl (C₁-C₂₀), 2-alkyl (C₁-C₂₀), 3-alkyl (C₁-C₂₀)-imidazolium cation associated with anions comprising one or more of halides, carboxylates, sulphates, nitrates, sulphonates, phosphates, PF₆, BF₄, CF₃SO₃, (CF₃SO₂)₂N and (CF₃CF₂)₂PF₃, pure or substantially pure and mixtures thereof in any proportions.

3. Metallic catalyst according to claim 1 or 2, **characterized in that** said nanoparticles are obtainable by a method that comprises a process of decomposition of compounds of metals comprising one or more of Co, Ru, Fe, Pd and Rh in the form of metal carbonyls preferably comprising one or more of Co₂(CO)₈, Co₄(CO)₁₂, Fe(CO)₅, Fe₂(CO)₈, Fe₃(CO)₁₂, Ru₃(CO)₁₂, Ru(1,5-cyclooctadiene)(1,3,5-cyclooctatriene), pure or substantially pure and mixtures thereof in any proportions dissolved in said ionic liquids.

4. Metallic catalyst according to claim 3,
**characterized in that** in addition it is produced in the presence of hydrogen applied under pressure preferably in the range from 4 bar to 50 bar, at temperatures in the range from 30°C to 300°C, preferably between 50°C and 100°C, for a period between 10 minutes and 72 hours.

5. Metallic catalyst according to any preceding claim, **characterized in that** additionally said nanoparticles are used directly in the process of Fischer-Tropsch synthesis, pure or substantially pure or mixed in any proportions, applied to supports comprising one or more of zeolites, silicas, aluminas and oxides, followed by the optional removal of the ionic liquid for use in the Fischer-Tropsch process.

6. Method for the production of a metallic catalyst, according to any preceding claim, **characterized in that** additionally said method is used for the preparation of supported catalysts containing more than one active metal, optionally in the presence of a promoter.

7. Method according to claim 6, **characterized in that** additionally said method is used in combination with a technique of dry impregnation and precipitation of metals, for the production of catalysts.
